# EUROPEAN PATENT APPLICATION

(11) **EP 3 783 945 A1**
(43) Date of publication of application: **24.02.2021**
(21) Application number: 18915707.6
(22) Date of filing: 17.04.2018
(51) Int. Cl.: H04W 24/10

(54) **USER EQUIPMENT AND MEASUREMENT REPORT TRANSMISSION METHOD**

(71) Applicant: NTT DOCOMO, INC., Chiyoda-ku Tokyo 100-6150 (JP)
(72) Inventor: MIN, Tianyang, Tokyo 100-6150 (JP); TAKAHASHI, Hideaki, Tokyo 100-6150 (JP)
(74) Representative: Hoffmann Eitle
(86) International application number: PCT/JP2018/015880
(87) International publication number: WO 2019/202664

(57) **Abstract**

UE (200) includes a measurement report transmitting unit (230) that transmits to a radio access network a Measurement Report based on an entering condition for a target of a Measurement Report, and a cell count judging unit (220) that judges number of triggering cells that trigger the transmission of the Measurement Report to the radio access network. hen the number of neighbor cells that fulfill the entering condition is equal to or more than the number of the triggering cells, the measurement report transmitting unit (230) transmits the Measurement Report, and prohibits the transmission of the Measurement Report until a predetermined time has passed from the transmission of the Measurement Report.

## Description

### TECHNICAL FIELD

The present invention relates to a user equipment and a measurement report transmitting method capable of transmitting to a radio access network a measurement report of reception quality of a serving cell and a neighbor cell.

### BACKGROUND ART

3rd Generation Partnership Project (3GPP) specifies Long Term Evolution (LTE), and with the aim of further speeding, specifies LTE-Advanced (hereinbelow, the LTE includes the LTE-Advanced).

In the LTE, a user equipment (UE) can transmit to a radio access network (E-UTRAN), specifically, to a radio base station (eNB) Measurement Report that includes measurement result of reception quality (such as RSRP / RSRQ (Reference Signal Received Power / Reference Signal Received Quality)) of a serving cell (a cell in a connected state (RRC Connected) in a radio resource control (RRC) layer) and a neighbor cell that is formed near the serving cell (see Non-Patent Document 1).

In such Measurement Reporting, events (A3, A5, and A6) that compare the reception quality of the serving cell and the reception quality of neighbor cell are stipulated. Moreover, in the Measurement Reporting, an event (A4) that compares the reception quality of the neighbor cell with an absolute threshold value is stipulated.

When an entering condition stipulated for each event is fulfilled, that is, a condition based on which it is determined whether to include the reception quality of a cell in a measurement report to be transmitted to the radio access network is fulfilled, the UE transmits Measurement Report that includes the measurement results to the eNB.

In such Measurement Reporting, measurement reports of a plurality of the neighbor cells that fulfills the entering condition can be transmitted simultaneously.

### PRIOR ART DOCUMENT

### NON-PATENT DOCUMENT

3GPP TS 36.331 V15.1.0 3rd Generation Partnership Project; Technical Specification Group Radio Access Network; Evolved Universal Terrestrial Radio Access (E-UTRA); Radio Resource Control (RRC); Protocol specification (Release 15), 3GPP, March 2018

### SUMMARY OF THE INVENTION

By the way, recently, UE is being mounted on a small-sized unmanned aerial vehicle (Unmanned Aerial Vehicles (UAV)) such as a drone. Because such UE flies in the sky above eNBs (cells), unlike the ordinary UE, such UE is less susceptible to receive effect of barriers such as buildings, and an unobstructed propagation environment is easily obtainable. In other words, such UE is easy to interfere with a plurality of neighbor cells other than a serving cell (own cell).

To solve this problem, the Measurement Reporting explained above can be utilized to detect such an interference at the radio access network side and implement appropriate measures such as handover to another cell.

However, in the UEs mounted on the drone via which a view of the propagation environment can be easily gained, a possibility of a frequent triggering of the Measurement Reporting for the plurality of the neighbor cells that fulfills the entering condition is high, and significant consumption of radio resources and increase in the processing load becomes a concern.

In such a scenario, a method in which the Measurement Reporting is triggered only when the number of the neighbor cells that fulfill the entering condition becomes equal to or more than number of triggering cells can be thought. Accordingly, the frequent triggering of the Measurement Reporting can be suppressed.

However, as long as the UE mounted on the drone is positioned in the sky, occurrence of a state in which the number of the neighbor cells that intermittently fulfill the entering condition becomes equal to or more than the number of the triggering cells is assumed. Therefore, even when the Measurement Reporting is triggered only when the number of the neighbor cells is equal to or more than the number of the triggering cells, there is a possibility that a large number of the Measurement Reporting is still triggered. In other words, when the UE is positioned in the sky, from the radio access network side, it is assumed that the frequency of the Measurement Reporting is too high.

Therefore, the present invention has been made in view of the above circumstances. One object of the present invention is to provide a user equipment and a measurement report transmitting method capable of realizing more appropriate measurement reporting in which consumption of radio resources is suppressed even when a view of a propagation environment can be easily gained such as in the case when the user equipment is mounted on Unmanned Aerial Vehicles (UAVs) such as a drone.

A user equipment according to one aspect of the present invention is a user equipment (UE 200) that transmits to a radio access network (radio access network 20) a measurement report that includes reception quality of a serving cell and a neighbor cell. The user equipment includes a measurement report transmitting unit (measurement report transmitting unit 230) that transmits to the radio access network the measurement report based on an entering condition for a target of the measurement report; and a cell count judging unit (cell count judging unit 220) that judges number of triggering cells (numberOfTriggeringCell) that trigger transmission of the measurement report to the radio access network. The measurement report transmitting unit transmits the measurement report when the number of the neighbor cells that fulfill the entering condition is equal to or more than the number of the triggering cells, and prohibits the transmission of the measurement report until a predetermined time period passes from the transmission of the measurement report.

A measurement report transmitting method according to another aspect of the present invention is a measurement report transmitting method of transmitting a measurement report that includes reception quality of a serving cell and a neighbor cell to a radio access network. The measurement report transmitting method includes transmitting the measurement report to the radio access network based on an entering condition for a target of the measurement report; and judging number of triggering cells that trigger the transmission of the measurement report to the radio access network. The transmitting includes transmitting the measurement report when the number of the neighbor cells that fulfill the entering condition is equal to or more than the number of the triggering cells, and not transmitting the measurement report until a predetermined time passes from the transmission of the measurement report.

### BRIEF DESCRIPTION OF DRAWINGS

FIG. 1 is an overall structural diagram of a radio communication system 10.
FIG. 2 is a functional block diagram of UE 200.
FIG. 3 is a diagram showing a flowchart of an operation in which a measurement report is transmitted by the UE 200 (Part 1 thereof).
FIG. 4 is a diagram showing a flowchart of the operation in which the measurement report is transmitted by the UE 200 (Part 2 thereof).
FIG. 5 is a diagram showing a communication sequence performed relating to transmission of the measurement report between eNB 100 and the UE 200.
FIG. 6 is a diagram showing an example of ReportConfigEUTRA.
FIG. 7 is a diagram showing an explanation of fields (a part thereof) of the ReportConfigEUTRA and conditions thereof.
FIG. 8 is a diagram showing a part of start and stopping conditions of a timer (a part thereof) that is used in a radio access network 20 (E-UTRAN).
FIG. 9 is a diagram showing an example of transitioning of RSRP / RSRQ of a serving cell and a neighbor cell.
FIG. 10 is a diagram showing an example of hardware configuration of the UE 200.

### MODES FOR CARRYING OUT THE INVENTION

Exemplary embodiments are explained below with reference to the accompanying drawings. Note that, the same or similar reference numerals are attached to the same functions and configurations, and the description thereof is appropriately omitted.

### (1) Overall Schematic Configuration of Radio Communication System

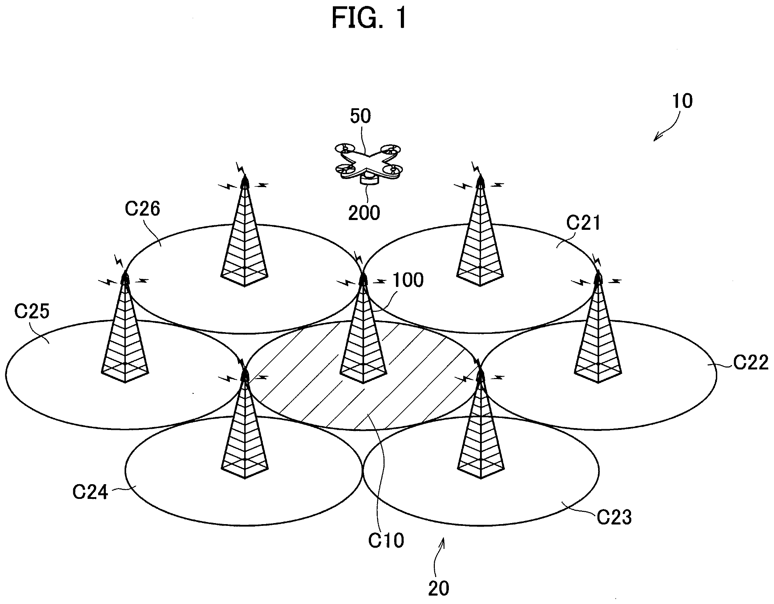

FIG. 1 is an overall schematic configuration diagram of a radio communication system 10 according to the present embodiment. The radio communication system 10 is a radio communication system in accordance with Long Term Evolution (LTE). The radio communication system 10 includes a radio access network 20 and a mobile station 200 (hereinafter, "UE 200").

The radio access network 20 is Evolved Universal Terrestrial Radio Access Network (E-UTRAN) stipulated in 3GPP, and includes radio base stations 100 (hereinafter, "eNB 100") . However, the radio communication system 10 is not necessarily limited to the LTE (E-UTRAN). For example, the radio access network 20 can be a radio access network that includes a radio base station that performs radio communication with the UE 200 (user equipment) that is stipulated as 5G.

The eNBs 100 and the UE 200 perform radio communication in accordance with the LTE specifications. Particularly, in the present embodiment, a plurality of the eNBs 100 form cells C10, and C21 to C26. Moreover, the UE 200 is mounted on a small-sized unmanned aerial vehicle (Unmanned Aerial Vehicles (UAV)) such as a drone 50.

In the present embodiment, the UE 200 uses the cell C10 as the serving cell. In other words, the cells C21 to C26 are formed near the cell C10 that is the serving cell. Alternatively, the serving cell can be referred to as PCell or PSCell (in the case of Dual Connectivity).

Moreover, the UE 200 transmits to the radio access network 20 Measurement Report that includes the reception quality (such as RSRP / RSRQ) of the serving cell and the neighbor cells.

### (2) Functional Block Configuration of Radio Communication System

Next, a functional block configuration of the radio communication system 10 will be explained. Specifically, the functional block configuration of the UE 200 is explained.

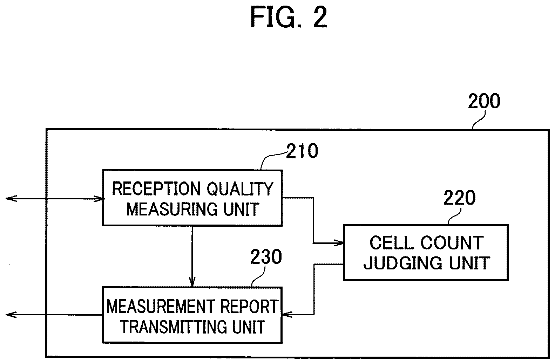

FIG. 2 is a functional block diagram of the UE 200. As shown in FIG. 2, the UE 200 includes a reception quality measuring unit 210, a cell count judging unit 220, and a measurement report transmitting unit 230.

The reception quality measuring unit 210 measures the reception quality of the serving cell of the UE 200 and the neighbor cells. Specifically, the reception quality measuring unit 210 measures the reception quality such as RSRP / RSRQ of the serving cell and the neighbor cell in accordance with a measurement configuration (MeasConfig) of the reception quality notified from the radio access network 20.

The cell count judging unit 220 judges number of triggering cells based on which the transmission of the Measurement Report to the radio access network 20 is to be triggered.

Specifically, the cell count judging unit 220 receives from the radio access network 20 ReportConfigEUTRA, which is an information element (IE) that defines a triggering condition for the transmission. The ReportConfigEUTRA is included in RRC Connection Reconfiguration. The ReportConfigEUTRA includes a field numberOfTriggeringCell that indicates the number of the triggering cells.

The number of the triggering cells (numberOfTriggeringCell) is determined according to whether an entering condition or a leaving condition based on a comparison between the reception quality of the serving cell and the reception quality of the neighbor cell is fulfilled. The entering condition stipulates whether to report the reception quality of the cell via the Measurement Report. The leaving condition stipulates whether to omit the reception quality of the cell from the Measurement Report.

Specifically, numberOfTriggeringCell is determined based on the entering condition or the leaving condition of events A3, A4, A5, and A6 stipulated in Chapter 6.3.5 of 3GPP TS36.331. The events A3, A5, and A6 are stipulated as follows:
Event A3: Neighbour becomes amount of offset better than PCell/ PSCell
Event A4: Neighbour becomes better than absolute threshold
Event A5: PCell/ PSCell becomes worse than absolute threshold1 AND Neighbour becomes better than another absolute threshold2
Event A6: Neighbour becomes amount of offset better than SCell

Moreover, in the present embodiment, numberOfTriggeringCell is set to a smaller value than that of the maximum number of the reported cells (maxReportCells) of the Measurement Report.

ReportConfigEUTRA further includes a field of a timer (in the present embodiment, explained as "InterferenceReportingProhibitTimer") that prohibits the transmission of the Measurement Report by the UE 200 for a predetermined time period.

The InterferenceReportingProhibitTimer is used to prohibit the transmission of the Measurement Report to the radio access network 20 for a predetermined time period even when several neighbor cells that fulfill the entering condition or the leaving condition of the event are detected.

Specifically, the InterferenceReportingProhibitTimer is activated when the Measurement Report is transmitted, when new cells equal to the number of the triggering cells (for example, two cells or more) specified in numberOfTriggeringCell are detected. Details relating to the InterferenceReportingProhibitTimer will be explained later.

The measurement report transmitting unit 230 transmits the Measurement Report to the radio access network 20. Specifically, based on the entering condition for a target of the Measurement Report, the measurement report transmitting unit 230 transmits the Measurement Report to the radio access network 20. When the entering condition is fulfilled, the measurement report transmitting unit 230 transmits the Measurement Report that includes the reception quality of the cell.

Alternatively, the measurement report transmitting unit 230 can transmit the Measurement Report when the number of the neighbor cells that fulfill the entering condition is equal to or more than the number of the triggering cells (numberOfTriggeringCell).

Alternatively, the measurement report transmitting unit 230 can transmit the Measurement Report when the number of the neighbor cells that fulfill the leaving condition for omitting the reception quality of a cell from the Measurement Report is equal to or more than the number of the triggering cells.

In other words, the measurement report transmission unit 230 can transmit the Measurement Report when the number of the neighbor cells that fulfill the entering condition is equal to or more than the number of the triggering cells, when the number of the neighbor cells that fulfill the leaving condition is equal to or more than the number of the triggering cells, or when a total of the number of the neighbor cells that fulfill the entering condition and the number of the neighbor cells that fulfill the leaving condition is equal to or more than the number of the triggering cells (numberOfTriggeringCell) .

When a neighbor cell fulfills the leaving condition, the measurement report transmitting unit 230 omits the reception quality of that cell from the Measurement Report because the cell could not fulfill the condition of the event, and then transmits the Measurement Report.

Furthermore, the measurement report transmitting unit 230 can prohibit the transmission of the measurement report until a predetermined time period has elapsed from the transmission of the Measurement Report. Specifically, by using the InterferenceReportingProhibitTimer explained above, the measurement report transmitting unit 230 prohibits the transmission of the Measurement Report to the radio access network 20 over that predetermined time period.

More specifically, the measurement report transmitting unit 230 activates the InterferenceReportingProhibitTimer that measures the predetermined time period at a transmission timing of the Measurement Report that is transmitted because the number of the neighbor cells that fulfill the entering condition (or the leaving condition) became equal to or more than numberOfTriggeringCell.

When the InterferenceReportingProhibitTimer expires, the measurement report transmitting unit 230 allows the transmission of the Measurement Report that is triggered when the number of the neighbor cells that fulfill the entering condition (or the leaving condition) became equal to or more than numberOfTriggeringCell.

Moreover, at the transmission timing of the Measurement Report that is triggered when the number of the neighbor cells that fulfill the entering condition (or the leaving condition) became equal to or more than the numberOfTriggeringCell, the measurement report transmitting unit 230 activates, separately from the InterferenceReportingProhibitTimer, a timer (in the present embodiment, referred to as T346) that monitors a time period elapsed until the connection in the RRC layer (RRC connection) is re-established.

In the present embodiment, the same setting values are used for the InterferenceReportingProhibitTimer and the T346.

### (3) Operation of Radio Communication System

Operation of the radio communication system 10 is explained below. Specifically, an operation in which the UE 200 transmits the measurement report is explained. As explained above, in the present embodiment, the UE 200 is mounted on the drone 50 and can easily achieve an unobstructed propagation environment.

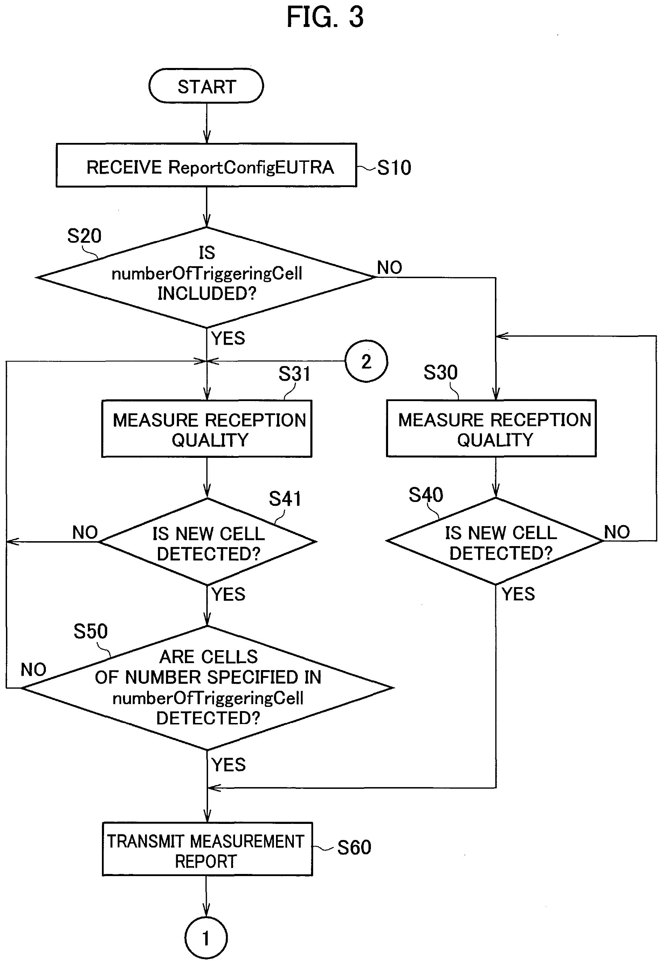

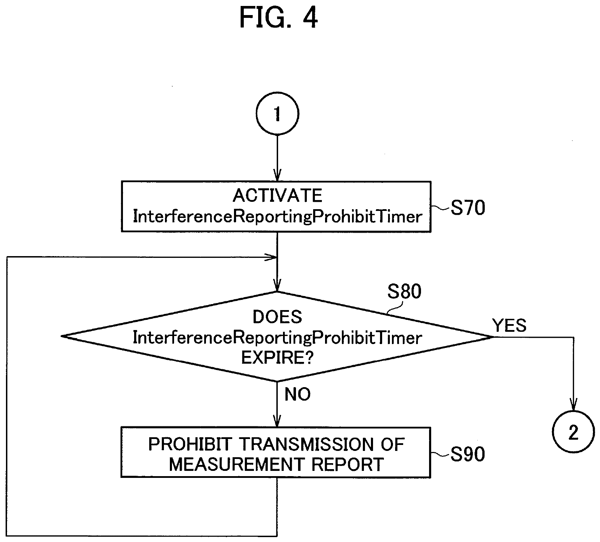

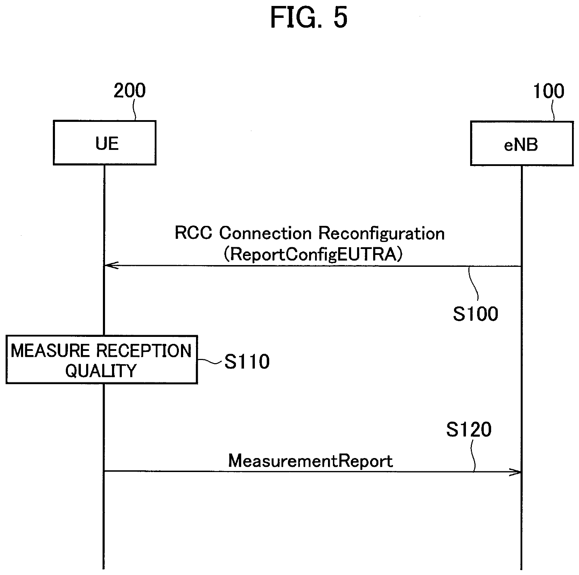

In FIGS. 3 and 4, flowcharts of an operation in which the measurement report is transmitted by the UE 200 is shown. In FIG. 5, a communication sequence relating to the measurement report transmission performed between the eNB 100 and the UE 200 is shown.

As shown in FIG. 3, the UE 200 receives ReportConfigEUTRA (Step S10). Specifically, as shown in FIG. 5, the UE 200 receives the RRC Connection Reconfiguration that includes the ReportConfigEUTRA (Step S100).

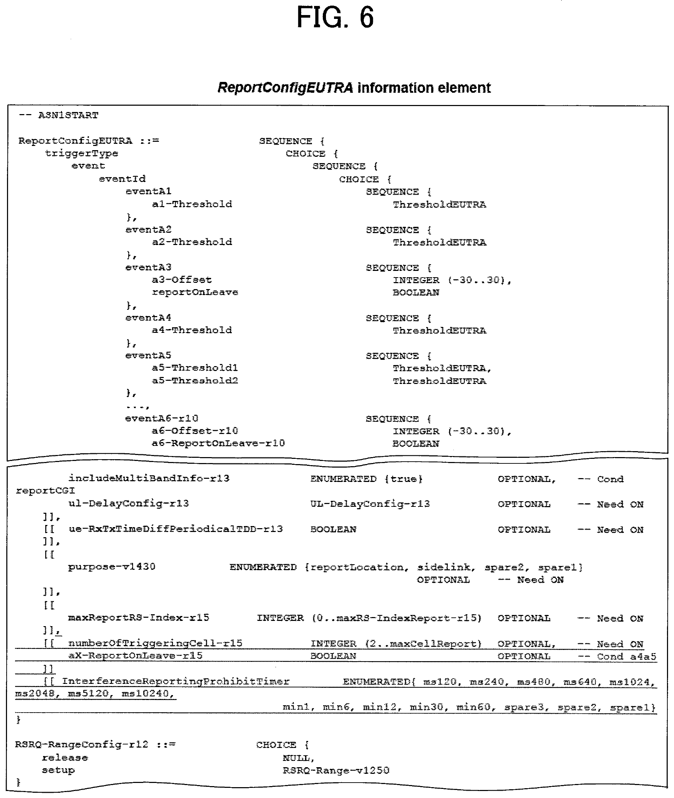

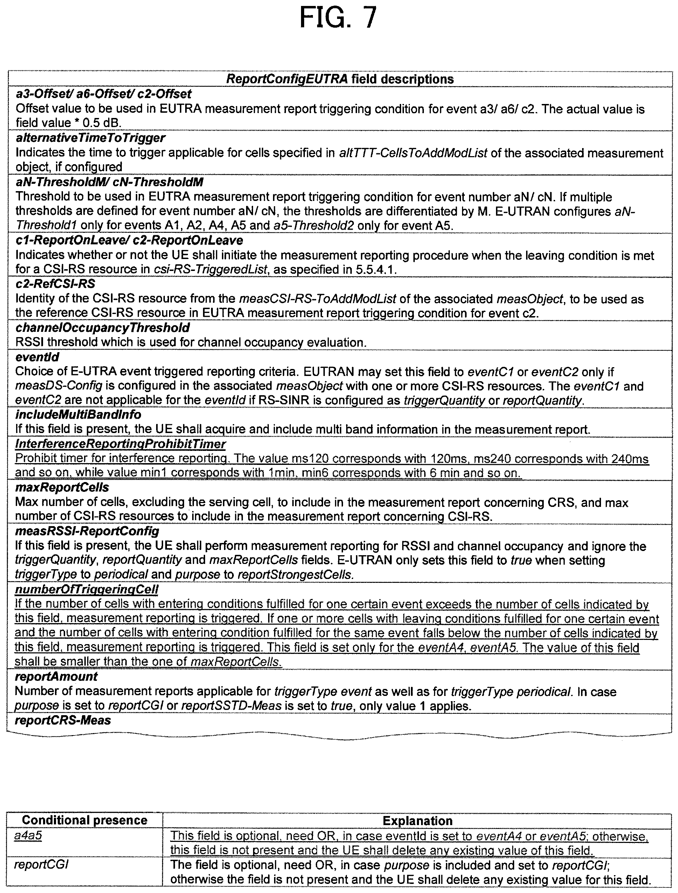

FIG. 6 shows an example of the ReportConfigEUTRA according to the present embodiment. In FIG. 7, an explanation of fields of the ReportConfigEUTRA (a part thereof) and conditions thereof is provided.

As shown in FIGS. 6 and 7, the numberOfTriggeringCell (see underlined parts in FIGS. 6 and 7) that indicates the number of the triggering cells is included in the ReportConfigEUTRA. The value of the numberOfTriggeringCell is stipulated as two or more, in other words, two or more neighbor cells. Moreover, the value of the numberOfTriggeringCell is set to a smaller value than that of the maxReportCells (maximum number of the reported cells).

The UE 200 judges whether the numberOfTriggeringCell that indicates the number of the triggering cells is included in the ReportConfigEUTRA (Step S20) .

When the numberOfTriggeringCell is not included, the UE 200 measures the reception quality of the serving cell and the neighbor cells according to the ordinary MeasConfig (Step S30 in FIG. 3, Step S110 in FIG. 4). The UE 200 judges whether a new cell that fulfills the entering condition (or the leaving condition) is detected (Step S40 in FIG. 3).

Even when the numberOfTriggeringCell is included, the UE 200 measures the reception quality of the serving cell and the neighbor cell in the same manner as that when measured according to the ordinary MeasConfig (Step S31 in FIG. 3, Step S110 in FIG. 5). The UE 200 judges whether a new cell that fulfills the entering condition (or the leaving condition) is detected (Step S41 in FIG. 3). However, when the numberOfTriggeringCell is included, the UE 200 further judges whether new cells equivalent to the number of the triggering cells (for example, two cells or more) specified in the numberOfTriggeringCell are detected (Step S50).

Furthermore, the entering conditions using the numberOfTriggeringCell provided in Chapter 5.5.4 of 3GPP TS36.331, for example, can be expressed as below:
2> if the triggerType is set to event, and if the corresponding reportConfig includes numberOfTriggeringCell and if the entry condition applicable for this event, i.e. the event corresponding with the eventId of the corresponding reportConfig within VarMeasConfig, is fulfilled for the number of applicable cells indicated in numberOfTriggeringCell for all measurements after layer 3 filtering taken during timeToTrigger defined for this event within the VarMeasConfig, while the VarMeasReportList does not include an measurement reporting entry for this measId (a first cell triggers the event) or;
2> if the triggerType is set to event, and if the corresponding reportConfig includes numberOfTriggeringCell and if the entry condition applicable for this event, i.e. the event corresponding with the eventId of the corresponding reportConfig within VarMeasConfig, is fulfilled for the number of applicable cells indicated in numberOfTriggeringCell not included in the cellsTriggeredList for all measurements after layer 3 filtering taken during timeToTrigger defined for this event within the VarMeasConfig (a subsequent cell triggers the event), or;

Moreover, the leaving conditions using the numberOfTriggeringCell, for example, can be expressed as below:
2> if the triggerType is set to event and if the corresponding reportConfig includes numberOfTriggeringCell and if the leaving condition applicable for this event is fulfilled for one or more of the cells and if the entry condition applicable for this event falls below the number of applicable cells indicated in numberOfTriggeringCell for all measurements included in the cellsTriggeredList defined within the VarMeasReportList for this measId for all measurements after layer 3 filtering taken during timeToTrigger defined within the VarMeasConfig for this event; or

When a new cell is detected, or when new cells equivalent to the number of the triggering cells (for example, two cells or more) specified in the numberOfTriggeringCell are detected, the UE 200 transmits the measurement report (Measurement Report) to the radio access network 20, specifically, to the eNB 100 (Step S60 in FIG. 3, Step S120 in FIG. 5).

Next, as shown in FIG. 4, the UE 200 activates the InterferenceReportingProhibitTimer (Step S70). Specifically, the UE 200 activates the InterferenceReportingProhibitTimer when the transmission of the Measurement Report transmitted at Step S60 is triggered because the new cells equivalent to the number of the triggering cells specified in the numberOfTriggeringCell are detected ("Yes" at Step S50).

More specifically, the UE 200 performs the InterferenceReportingProhibitTimer at the transmission timing of the Measurement Report that is transmitted because the number of the neighbor cells that fulfill the entering condition (or the leaving condition) became equal to or more than the numberOfTriggeringCell. The transmission timing of the Measurement Report is typically the same timing as that of the transmission of the Measurement Report, however, the transmission timing can be a timing after a predetermined time period (for example, about several hundred milliseconds (ms)) has elapsed from the transmission of the Measurement Report.

In Chapter 5.5.5 of 3GPP TS36.331, the activation of the InterferenceReportingProhibitTimer (hereinafter, "interference reporting prohibit timer"), for example, can be expressed as below:
0058] 1> stop the interference reporting prohibit timer or timer T346, if running;
1> if the numberOfReports Sent as defined within the VarMeasReportList for this measId is less than the report Amount as defined within the corresponding reportConfig for this measId:
2> start the interference reporting prohibit timer or T346 with the value of InterferenceReportingProhibitTimer as defined within the corresponding reportConfig for this measId;

Moreover, at Step S70, the UE 200 can activate the T346 that monitors the time period elapsed until the RRC connection between the eNB 100 and the UE 200 is re-established.

0059] As shown in FIGS. 6 and 7, the InterferenceReportingProhibitTimer (see underlined parts in FIGS. 6 and 7) is included in the ReportConfigEUTRA. The InterferenceReportingProhibitTimer is a timer that prohibits the transmission of the interference reporting, that is, prohibits the transmission of the Measurement Report that includes the measurement results of the reception quality of the neighbor cells.

0060] A numerical value indicated in the InterferenceReportingProhibitTimer field is a set value of the timer (a time period elapsed between the activation of the timer and the expiration thereof) . In the present embodiment, it is possible to set InterferenceReportingProhibitTimer to any value between 120 ms ("ms120" in the figure) and 10240 ms (ms10240 in the figure), or 1 minute (min(s)) ("min1" in the figure) and 60 minutes ("min60" in the figure).

0061] Moreover, the ReportConfigEUTRA includes "aX-ReportOnLeave-r15". Similar to the ReportOnLeave, the aX-ReportOnLeave-r15 indicates whether to start the measurement reporting procedure when the leaving condition is fulfilled. However, the aX-ReportOnLeave-r15 is only applicable to events A4 and A5 (see conditional presence: a4a5 in FIGS. 6 and 7).

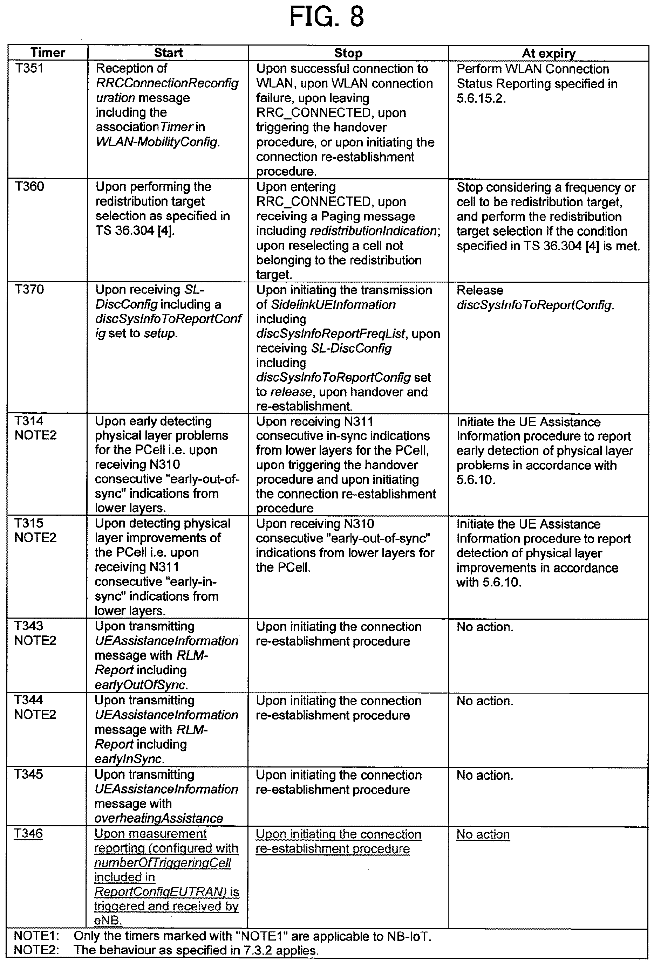

0062] FIG. 8 shows a part of start and stopping conditions of timer (a part thereof) used in the radio access network 20 (E-UTRAN) . The contents shown in FIG. 8 are defined in Chapter 7. 3 of 3GPP TS36. 331.

0063] As shown in FIG. 8, as soon as the Measurement Report is triggered when the cells equivalent to the number of the triggering cells specified in the numberOfTriggeringCell are detected and the Measurement Report is received by the eNB 100, the T346 is activated. Moreover, the T346 is stopped as soon as the RRC connection re-establishment procedure (RRC Connection Reestablishment) is started.

0064] The UE 200 judges whether the activated InterferenceReportingProhibitTimer has expired (Step S80). Because, the prohibition of Measurement Report transmission is released when the InterferenceReportingProhibitTimer expires, the UE 200 returns to the process performed at Step S31 (FIG. 3), and measures the reception quality of the serving cell and the neighbor cells.

0065] However, instead of the process performed at Step S31, the UE 200 can return to the process performed at Step S60. In other words, the UE 200 can continue performing the process at Steps S31, S41, and S50 even when the InterferenceReportingProhibitTimer is active, and can perform the transmission of the Measurement Report of Step S60 as soon as the InterferenceReportingProhibitTimer expires.

0066] On the other hand, when the InterferenceReportingProhibitTimer has not expired, that is, when the InterferenceReportingProhibitTimer is active, the UE 200 prohibits the transmission of the Measurement Report (Step S90).

0067] In this manner, if the InterferenceReportingProhibitTimer is active when the Measurement Report is transmitted for a first time at Step S60, the UE 200 cannot transmit the next Measurement Report even when the cells equivalent to the number of the triggering cells specified in the numberOfTriggeringCell are detected.

### 0068] (4) Effects and Advantages

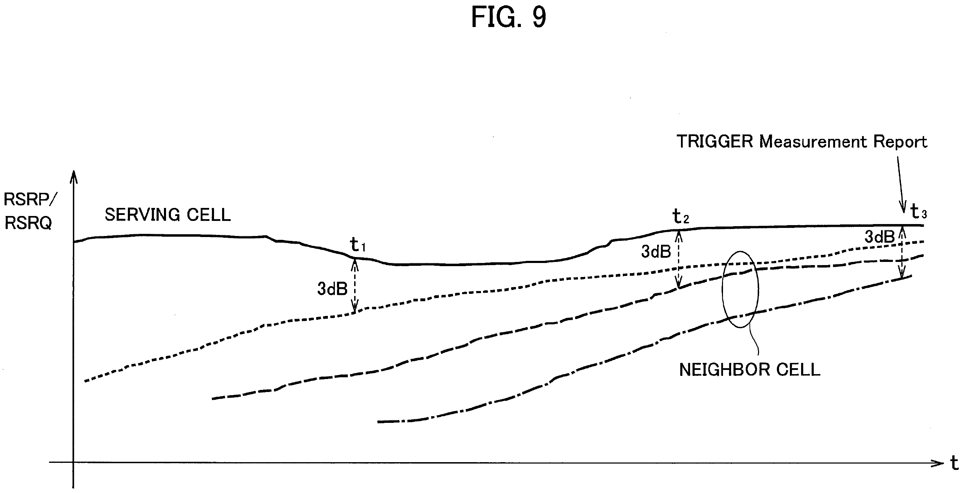

The following operational effects can be obtained with the embodiments explained above. FIG. 9 shows an example of transitioning of RSRP / RSRQ of the serving cell and the neighbor cells.

0069] In the example shown in FIG. 9, when a level difference between RSRP / RSRQ of the serving cell and RSRP / RSRQ of the neighbor cell becomes 3 decibels (dB) or less, the entering condition, that is, a condition for including the reception quality of a cell in the measurement report to be transmitted to the radio access network 20 is fulfilled, and RSRP / RSRQ of that neighbor cell is reported.

0070] In the ordinary Measurement Reporting, when the level difference between RSRP / RSRQ of the serving cell and RSRP / RSRQ of each of the neighbor cells becomes 3 dB or less, the UE 200 transmits the Measurement Report to the radio access network 20 (eNB 100) at respective timings (at t1, t2 in the figure).

0071] On the other hand, when the numberOf TriggeringCell explained above (in FIG. 7, an example in which the value is set to "3") is applied, the Measurement Report is not transmitted at the timings t1 and t2, but the UE 200 transmits the Measurement Report at a timing at which the level difference of the three neighbor cells becomes 3 dB or less (at t3).

0072] In other words, the UE 200 triggers the Measurement Report when the plurality of the neighbor cells fulfills the entering condition /leaving condition of the event at the same time.

0073] Accordingly, the number of the Measurement Reports transmitted by the UE 200 can be significantly reduced, and consumption of the radio resources can be suppressed. Particularly, similar to the UE 200 mounted on the drone 50, even when the view of the propagation environment can be easily gained and a possibility of the reception quality of a large number of the neighbor cells fulfilling the entering condition is high, the number of the Measurement Reports can be reduced effectively.

0074] Furthermore, in the present embodiment, until the predetermined time period has elapsed from the transmission of the Measurement Report that is triggered because the number of the neighbor cells that fulfill the entering condition (or the leaving condition; hereinafter the same) became equal to or more than the number of the triggering cell (numberOf TriggeringCell), the transmission of the Measurement Report triggered because the numberOfTriggeringCell is fulfilled is prohibited.

0075] Therefore, similar to the UE 200 having a high frequency of being positioned in the sky because of being mounted on the drone 50, even if the frequency of the Measurement Reporting is too high for the radio access network 20, it is possible to realize an appropriate measurement reporting in which the consumption of the radio resources is suppressed. Moreover, with such a configuration, it is possible to suppress the overall processing load of the radio access network 20.

0076] More specifically, when the UE 200 mounted on the drone 50 is positioned in the sky (assumed to be positioned at about 300 meters (m) above the ground) and the number of the neighbor cells that fulfill the condition of the events for interference reporting (events A4 and A5) becomes equal to or more than the numberOfTriggeringCell, a first Measurement Report is transmitted. However, as long as the UE 200 stays in the sky, there may be a situation in which number of the neighbor cells that fulfill the entering condition emerge in succession.

0077] In such a case, occurrence of a state in which the number of the neighbor cells that fulfill the entering condition becomes equal to or more than the numberOf TriggeringCell emerge in succession and the transmission of the Measurement Report is triggered becomes a concern. In other words, for the radio access network 20, as long as the UE 200 is positioned in the sky, there may be a case in which the Measurement Reports triggered because the interference is detected is too frequent, however, according to the present embodiment, the transmission of such frequent Measurement Reports can be more reliably suppressed.

0078] In the present embodiment, at the transmission timing of the Measurement Report triggered because the number of the neighbor cells that fulfill the entering condition becomes equal to or more than the number of cells specified in the numberOf TriggeringCell, the UE 200 activates the InterferenceReportingProhibitTimer that measures the predetermined time period (for example, 1 min) .

0079] Therefore, it is possible to reliably prohibit the transmission of the Measurement Report triggered because the numberOfTriggeringCell is fulfilled over the specified predetermined time period from the transmission timing of the Measurement Report.

0080] In the present embodiment, the numberOf TriggeringCell is applicable to the entering condition as well as the leaving condition. Therefore, the number of the Measurement Reports can be reduced further effectively.

0081] In the present embodiment, the UE 200 receives from the radio access network 20 the ReportConfigEUTRA (information element) that stipulates a trigger for the transmission of the Measurement Report, and the ReportConfigEUTRA includes the numberOfTriggeringCell and the InterferenceReportingProhibitTimer. Therefore, the transmission frequency of the number of the Measurement Reports can be suppressed at an initiative of the radio access network 20.

### 0082] (5) Other Embodiments

The present invention has been explained in detail by using the above mentioned embodiments; however, it is self-evident to a person skilled in the art that the present invention is not limited to the embodiments explained herein and that the embodiments can be modified or improved in various ways.

0083] For example, in the embodiments explained above, the UE 200 is mounted on the drone 50. However, the UE 200 may not necessarily be mounted on flying objects such as the drone 50. In other words, the present invention can be applied even to the ordinary user equipment such as a smartphone. Even when such ordinary user equipment is positioned in the sky similar to the UE 200 for some reason, the same effect as that obtained in the embodiments explained above can be obtained.

0084] Moreover, the block diagram used for explaining the embodiments (FIG. 2) shows functional blocks. Those functional blocks (structural components) can be realized by a desired combination of hardware and / or software. Means for realizing each functional block is not particularly limited. That is, each functional block may be realized by one device combined physically and / or logically. Alternatively, two or more devices separated physically and / or logically may be directly and / or indirectly connected (for example, wired and / or wireless) to each other, and each functional block may be realized by these plural devices.

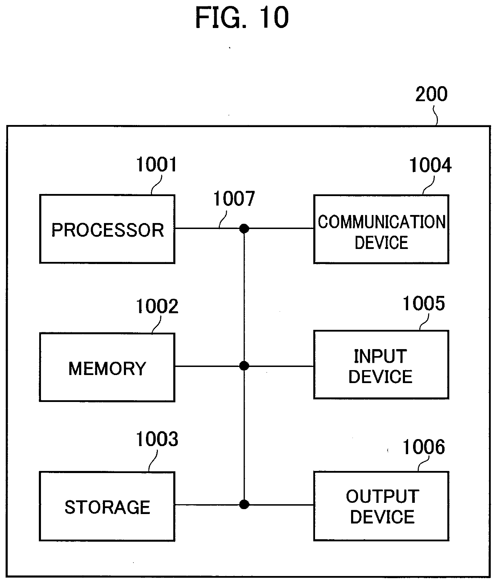

0085] Furthermore, the UE 200 explained above can function as a computer that performs the processing of the present invention. FIG. 10 is a diagram showing an example of a hardware configuration of the UE 200. As shown in FIG. 10, this device can be configured as a computer device including a processor 1001, a memory 1002, a storage 1003, a communication device 1004, an input device 1005, an output device 1006, a bus 1007, and the like.

0086] The functional blocks of the device (see FIG. 2) can be realized by any of hardware elements of the computer device or a desired combination of the hardware elements.

0087] The processor 1001, for example, operates an operating system to control the entire computer. The processor 1001 can be configured with a central processing unit (CPU) including an interface with a peripheral device, a control device, a computing device, a register, and the like.

0088] The memory 1002 is a computer readable recording medium and is configured, for example, with at least one of ROM (Read Only Memory), EPROM (Erasable Programmable ROM), EEPROM (Electrically Erasable Programmable ROM), RAM (Random Access Memory), and the like. The memory 1002 can be called register, cache, main memory (main memory), and the like. The memory 1002 can store therein a computer program (computer program codes), software modules, and the like that can execute the method according to the above embodiments.

0089] The storage 1003 is a computer readable recording medium. Examples of the storage 1003 include an optical disk such as CD-ROM (Compact Disc ROM), a hard disk drive, a flexible disk, a magneto-optical disk (for example, a compact disk, a digital versatile disk, a Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

0090] The communication device 1004 is hardware (transmission / reception device) capable of performing communication between computers via a wired and / or wireless network. The communication device 1004 is also called, for example, a network device, a network controller, a network card, a communication module, and the like.

0091] The input device 1005 is an input device (for example, a keyboard, a mouse, a microphone, a switch, a button, a sensor, and the like) that accepts input from the outside. The output device 1006 is an output device (for example, a display, a speaker, an LEDlamp, and the like) that outputs data to the outside. Note that, the input device 1005 and the output device 1006 may be integrated (for example, a touch screen).

0092] In addition, the respective devices, such as the processor 1001 and the memory 1002, are connected to each other with the bus 1007 for communicating information there among. The bus 1007 can be constituted by a single bus or can be constituted by separate buses between the devices.

0093] In addition, the manner of notification of information is not limited to the one explained in the embodiments, and the notification may be performed in other manner. For example, the notification of information can be performed by physical layer signaling (for example, DCI (Downlink Control Information), UCI (Uplink Control Information)), upper layer signaling (for example, RRC signaling, MAC (Medium Access Control) signaling, notification information (MIB (Master Information Block), SIB (System Information Block)), other signals, or a combination thereof. In addition, the RRC signaling can be called RRC message, and the RRC signaling can be, for example, RRC Connection Setup message, RRC Connection Reconfiguration message, and the like.

0094] Furthermore, the input / output information can be stored in a specific location (for example, a memory) or can be managed in a management table. The information to be input /output can be overwritten, updated, or added. The information can be deleted after outputting. The inputted information can be transmitted to another device.

0095] The order of the sequences, flowcharts, and the like in the embodiments can be rearranged unless there is a contradiction.

0096] Moreover, in the embodiments explained above, the specific operations performed by the eNB 100 can be performed by another network node (device). Moreover, functions of the eNB 100 can be provided by combining a plurality of other network nodes.

0097] Moreover, the terms used in this specification and / or the terms necessary for understanding the present specification can be replaced with terms having the same or similar meanings. For example, a channel and / or a symbol can be replaced with a signal (signal) if that is stated. Also, the signal can be replaced with a message. Moreover, the terms "system" and "network" can be used interchangeably.

0098] Furthermore, the used parameter and the like can be represented by an absolute value, can be expressed as a relative value from a predetermined value, or can be represented by corresponding other information. For example, the radio resource can be indicated by an index.

0099] The eNB 100 (base station) can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use RRH: Remote Radio Head).

0100] The term "cell" or "sector" refers to a part or all of the coverage area of a base station and / or a base station subsystem that performs communication service in this coverage. In addition, the terms "base station" "eNB", "cell", and "sector" can be used interchangeably in the present specification. The base station can also be referred to as a fixed station, NodeB, eNodeB (eNB), gNodeB (gNB), an access point, a femtocell, a small cell, and the like.

0101] The UE 200 is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

0102] As used herein, the phrase "based on" does not mean "based only on" unless explicitly stated otherwise. In other words, the phrase "based on" means both "based only on" and "based at least on".

0103] Furthermore, the terms "including", "comprising", and variants thereof are intended to be inclusive in a manner similar to "having". Furthermore, the term "or" used in the specification or claims is intended not to be an exclusive disjunction.

0104] Any reference to an element using a designation such as "first", "second", and the like used in the present specification generally does not limit the amount or order of those elements. Such designations can be used in the present specification as a convenient way to distinguish between two or more elements. Thus, the reference to the first and second elements does not imply that only two elements can be adopted, or that the first element must precede the second element in some or the other manner.

0105] Throughout the present specification, for example, during translation, if articles such as a, an, and the in English are added, these articles shall include plurality, unless it is clearly indicated that it is not so according to the context.

0106] As described above, the details of the present invention have been disclosed by using the embodiments of the present invention. However, the description and drawings which constitute part of this disclosure should not be interpreted so as to limit the present invention. From this disclosure, various alternative embodiments, examples, and operation techniques will be apparent to a person skilled in the art.

### INDUSTRIAL APPLICABILITY

0107] As explained above, the present invention is useful in that, when a view of a propagation environment can be easily gained such as when a user equipment is mounted on Unmanned Aerial Vehicles (UAVs) such as a drone and, it is possible to realize an appropriate measurement reporting in which the consumption of the radio resources is further suppressed.

### EXPLANATION OF REFERENCE NUMERALS

0108]
- 10: radio communication system
- 20: radio access network
- 50: drone
- 100: eNB
- 200: UE
- 210: reception quality measuring unit
- 220: cell count judging unit
- 230: measurement report transmitting unit
- 1001: processor
- 1002: memory
- 1003: storage
- 1004: communication device
- 1005: input device
- 1006: output device
- 1007: bus
- C10, C21 to C26: cell

## Claims

1. A user equipment that transmits to a radio access network a measurement report that includes reception quality of a serving cell and a neighbor cell, the user equipment comprising:
a measurement report transmitting unit that transmits to the radio access network the measurement report based on an entering condition for a target of the measurement report; and
a cell count judging unit that judges number of triggering cells that trigger transmission of the measurement report to the radio access network,
wherein the measurement report transmitting unit
transmits the measurement report when the number of the neighbor cells that fulfill the entering condition is equal to or more than the number of the triggering cells, and
prohibits the transmission of the measurement report until a predetermined time period passes from the transmission of the measurement report.

2. The user equipment as claimed in claim 1, wherein the measurement report transmitting unit activates a timer that measures the predetermined time period at the transmission timing of the measurement report that is transmitted when the number of the neighbor cells that fulfill the entering condition becomes equal to or more than the number of the triggering cells.

3. The user equipment as claimed in claim 1 or 2, wherein the measurement report transmitting unit transmits the measurement report when the number of the neighbor cells that fulfill the entering condition or a leaving condition for omitting the reception quality of a cell from the measurement report is equal to or more than the number of the triggering cells.

4. The user equipment as claimed in any one of claims 1 to 3, wherein the cell count judging unit receives from the radio access network an information element that stipulates a condition for triggering transmission, and the information element includes the predetermined time period.

5. A measurement report transmitting method of transmitting a measurement report that includes reception quality of a serving cell and a neighbor cell to a radio access network, the measurement report transmitting method comprising:
transmitting the measurement report to the radio access network based on an entering condition for a target of the measurement report; and
judging number of triggering cells that trigger the transmission of the measurement report to the radio access network,
wherein the transmitting includes
transmitting the measurement report when the number of the neighbor cells that fulfill the entering condition is equal to or more than the number of the triggering cells, and
not transmitting the measurement report until a predetermined time passes from the transmission of the measurement report.
